# EUROPÄISCHE PATENTSCHRIFT

(11) **EP 0 621 614 B1**
(45) Veröffentlichungstag und Bekanntmachung des Hinweises auf die Patenterteilung: **12.02.1997**
(21) Anmeldenummer: 94105110.4
(22) Anmeldetag: 31.03.1994
(51) Int. Cl.: H01H 9/22, H02B 11/133

(54) **Trennbarer Schalter**
Disconnectable circuit breaker
Disjoncteur débrochable

(30) Priorität: 21.04.1993 IT MI930785; 21.04.1993 IT MI930790
(43) Veröffentlichungstag der Anmeldung: 26.10.1994
(73) Patentinhaber: ABB SACE SPA, I-24100 Bergamo (IT)
(72) Erfinder: Dosmo, Renato, I-24100 Bergamo (IT); Bonetti, Luigi, I-24100 Bergamo (IT)
(74) Vertreter: Kaiser, Helmut, Dr.

(56) Entgegenhaltungen:
- EP-A- 0 045 545
- EP-A- 0 226 532
- DE-A- 3 117 495
- US-A- 4 112 269

## Beschreibung

Bei der Erfindung wird ausgegangen von einem Schaltschrank nach dem Oberbegriff von Patentanspruch 1.

Einfahr- bzw. Trennstellung bedeutet hierbei eine Stellung des Schalters, in der ein die Leistungskontakte des Schalters enthaltender Gehäusekörper galvanisch verbunden bzw. getrennt ist von Kontaktstücken für die Stromversorgung und für die Stromverteilung. Diese Kontaktstücke befinden sich in einem im Schaltschrank montierten feststehenden Teil des Schalters. Die Vorderseite des Schalters, an der ein Schalthebel angebracht ist, ragt gewöhnlich aus der Schaltschranktür heraus, um von aussen eine Betätigung des Schalters zu ermöglichen, ohne die Schaltschranktür öffnen zu müssen. Ein Schaltschrank der eingangs genannten Art erfüllt daher vergleichsweise strenge Sicherheitsvorschriften und ermöglicht zugleich eine einfache Inspektion und ein einfaches Austauschen der Leistungskontakte des Schalters. Hierbei wird der die Leistungskontakte enthaltende bewegliche Gehäusekörper des Schalters von dem im Schaltschrankinneren angeordneten feststehenden Teil des Schalters getrennt und aus dem Schaltschrankinneren herausgenommen.

Ein Schaltschrank der eingangs genannten Art ist in der Patentveröffentlichung DE 31 17 495 A1 beschrieben. Bei diesem Schaltschrank wird ein mit seitlichen Führungsnocken versehenes und eine Leistungskontaktanordnung sowie Einfahrkontakte aufweisendes Schaltgerät auf waagerechten Führungsnuten gelagert in den geöffneten Schaltschrank eingeschoben. Durch eine nachfolgend ausgeführte Hubbewegung werden bei geöffneten Leistungskontakten die Einfahrkontakte mit feststehenden Gegenkontakten des Schaltschranks in Eingriff gebracht. Bei geschlossenem Schaltschrank kann anhand der Stellung eines durch die Schaltschranktür geführten Betätigungsteils festgestellt werden, ob das Schaltgerät mit den Gegenkontakten kontaktiert oder nicht kontaktiert ist, oder ob es sich in einer Teststellung befindet. Ein Riegel gewährleistet, dass bei der Hubbewegung die Leistungskontakte mechanisch ausgeschaltet werden, so dass ein unerwünschten Draufschalten vermieden wird. Dennoch kann nicht mit Sicherheit ausgeschlossen werden, dass in unzulässiger Weise eine Hub- oder Senkbewegung ausgeführt wird, was zu Beschädigungen des Schaltschranks führen kann und selbst bei geschlossener Tür noch ein gewisses Unfallrisiko darstellt.

Der Erfindung, wie sie in Patentanspruch 1 definiert ist, liegt die Aufgabe zugrunde, einen Schaltschrank der eingangs genannten Art zu schaffen, bei dem bei Bedienungsfehler nahezu vollständig ausgeschlossen sind und Montage- und Wartungsarbeiten praktisch risikofrei ausgeführt werden können.

Der Schaltschrank nach der Erfindung zeichnet sich dadurch aus, dass der Schalter nur dann von der Einfahr- in die Trennstellung und umgekehrt von der Trenn- in die Einfahrstellung gebracht werden kann, wenn die Schaltschranktür geschlossen ist, und wenn eine in der Schaltschranktür vorgesehene und von der Stellung der Schalterleistungskontakte gesteuerte Öffnung für ein Betätigungswerkzeug geöffnet ist. Durch diese beiden Sicherheitsvorkehrungen werden Schäden oder Unfälle während der Phase des Trennens und Einfahrens nahezu vollständig ausgeschlossen.

Besonders bevorzugte Ausführungsbeispiele des erfindungsgemässen Schalters werden nun anhand von Zeichnungen beschrieben. Hierbei zeigen:
Figuren 1 und 2 jeweils in schematischer Darstellung und in perspektivischer Ansicht einen gemäss der vorliegenden Erfindung ausgebildeten Schaltschrank mit einem Schalter,
Fig. 3 ein feststehend ausgebildetes Teil des in den Figuren 1 und 2 dargestellten Schalters, das im Inneren des Schaltschranks montiert ist und ein als Hebelwerk ausgebildetes Teil einer Trennvorrichtung aufweist,
Fig. 4 das feststehende ausgebildete Teil gemäss Fig.3, bei dem nun zusätzlich eine Ankoppelvorrichtung der Trennvorrichtung dargestellt ist, welche an einem bewegbaren Gehäusekörper des Schalters schwenkbar gelagert ist,
Fig.5 die Trennvorrichtung gemäss den Figuren 3 und 4 beim Ent- oder Verklinken von Ankoppelvorrichtung und Hebelwerk,
Fig.6 die Trennvorrichtung gemäss den Figuren 3 und 4 in einem Zustand, in dem ein Verschieben des Gehäusekörpers im feststehenden Teil des Schalters nicht möglich ist,
Fig.7 die Trennvorrichtung gemäss den Figuren 3 und 4 in einem Zustand, in dem ein Verschieben des Gehäusekörpers in feststehenden Teil des Schalters möglich ist,
Fig.8 den Schalter gemäss den Figuren 3 bis 7 in einem Zustand, in dem der Gehäusekörper aus dem feststehenden Teil des Schalters herausgeschoben ist,
Figuren 9, 10 und 11 verschiedene Möglichkeiten hinsichtlich der Anordnung des Schalters gemäss den Figuren 3 bis 8 im Schaltschrank,
Figuren 12 und 13 in schematischer Darstellung den Schalter gemäss den Figuren 3 bis 8 in der Trenn- und in der Einfahrstellung,
Fig.14 in perspektivischer Ansicht das mit einer zusätzlich vorgesehenen Sicherheits- und Sperrvorrichtung zusammenwirkende feststehende Teil des Schalters gemäss den Figuren 3 bis 8,
Figuren 15 bzw. 16 die Sicherheits- und Sperrvorrichtung gemäss Fig.14 in inaktivem bzw. aktivem Zustand,
Fig.17 eine Seitenansicht des feststehenden Teils mit der zusätzlichen Sicherheits- und Sperrvorrichtung gemäss Fig.14.

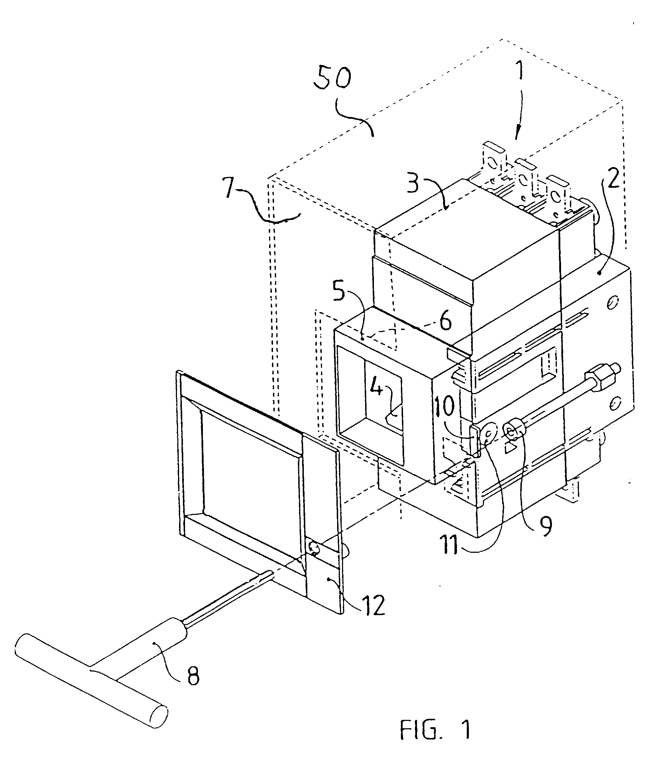

In allen Figuren bezeichnen gleiche Bezugszeichen auch gleichwirkende Teile. Wie man aus Fig.1 entnehmen kann, setzt sich ein dreiphasig ausgebildeter und für Spannungen bis typischerweise 500 V vorgesehener Schalter 1 aus einem feststehenden Teil 2, das in einem elektrischen Schaltschrank 50 montiert ist, und einem beweglichen kastenförmigen Gehäusekörper 3 zusammen. Wenn der Gehäusekörper 3 in das feststehenden Teil 2 des Schalters eingefahren ist, fliesst über den Schalter von Eingangskontakten eingespeister Strom zu Verteilungskontakten. Dieser Stromfluss kann unter Zuhilfenahme eines Schalthebels 4, der aus der Vorderseite des Schaltschrankes herausragt, unterbrochen werden.

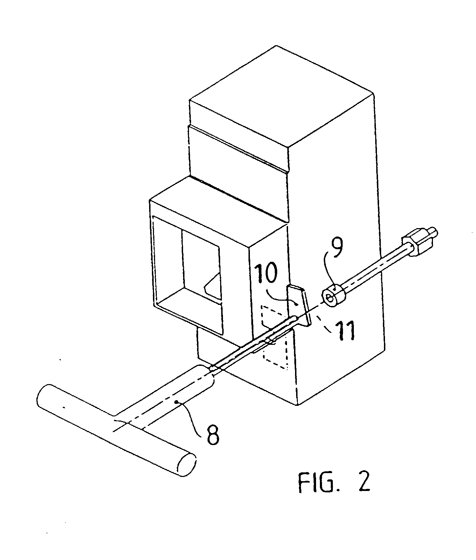

Auf der Vorderseite des Schalters 1 ragt eine Abdeckung bzw. ein Zusatzaggregat 5 heraus, das durch eine Öffnung 6 hindurchgeführt ist, die in einer Tür 7 des den Schalter 1 aufnehmenden Schaltschranks 50 vorgesehen ist. Die Tür 7 des Schaltschranks weist eine weitere Öffnung 11 auf, so dass man mit einem Werkzeug 8, wie etwa einem Schlüssel oder einem entsprechend wirkenden Mittel, auf eine Betätigungswelle 9 einwirken kann, mit der es möglich ist, eine Trennvorrichtung zu aktivieren, die im folgenden noch ausführlicher beschrieben wird. In dem Zusatzaggregat 5 ermöglicht der Schalthebel 4, eine Sperrfahne 10 zu aktivieren, die es wiederum gestattet, die Öffnung 11 zu sperren oder freizugeben, welche in der Tür 7 der Schalttafel angeordnet ist. In Fig. 1 befindet sich die Sperrfahne 10 in einer Position, in der die Öffnung 11 freigegeben ist, so dass es möglich ist, mit dem Werkzeug 8 ungehindert auf die Betätigungswelle 9 zuzugreifen, während in Fig. 2 die Sperrfahne 10 sich in einer Position befindet, in der die Öffnung 11 abgedeckt ist und so verhindert wird, dass man mit dem Werkzeug 8 den Sitz der Betätigungswelle 9 erreichen kann. Der Schalthebel 4 des Gehäusekörpers 3 befindet sich dann nämlich in einer Position, in der der Schalter geschlossen ist.

Wie man aus Fig.1 entnehmen kann, ragt das Zusatzaggregat 5 durch die Wand der Tür 7 heraus. Vorteilhafterweise werden das Zusatzaggregat 5 sowie die Öffnung 6 der Tür 7 an der Aussenseite der Tür durch eine Abdeckung 12 verkleidet, die die Öffnung 11 für das Werkzeug 8 aufweist.

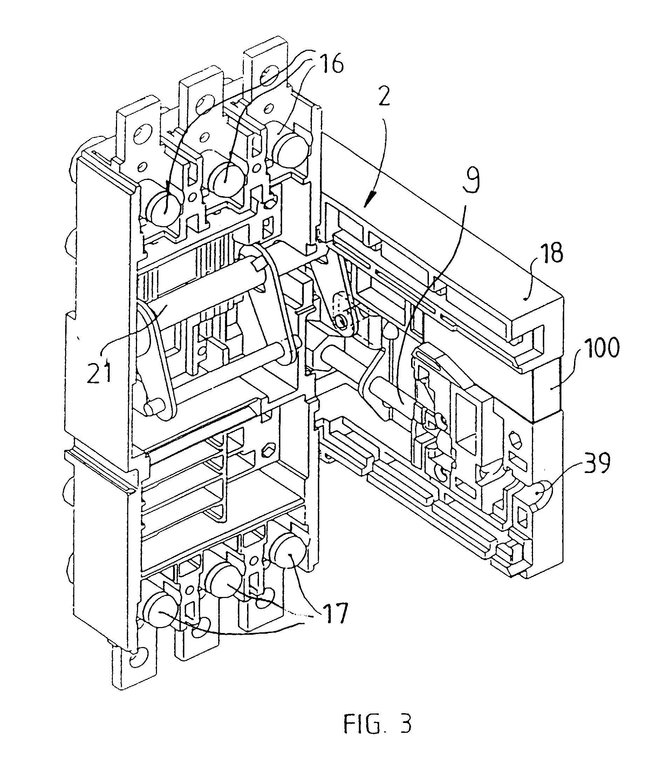

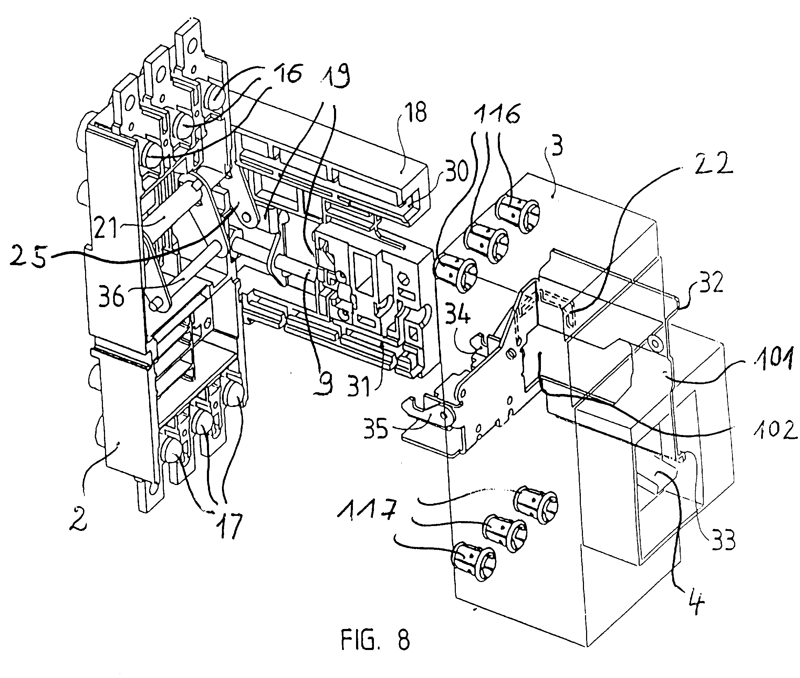

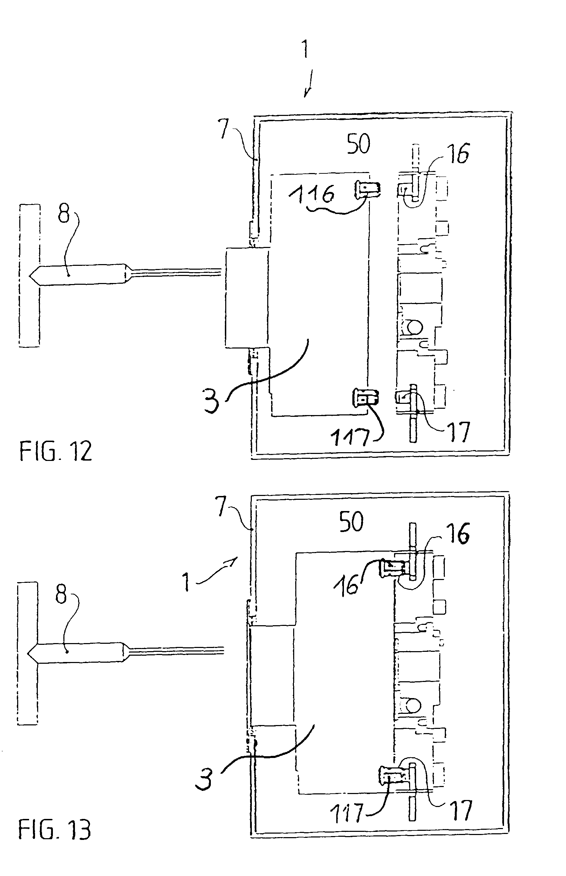

In Fig.3 kann man in perspektivischer Ansicht das feststehende Teil des Schalters erkennen. An der Oberseite sind nichtbezeich-nete Anschlussklemmen für die Stromversorgung und an der Unterseite ebenfalls nichtbezeichnete Anschlussklemmen für die Stromverteilung vorgesehen. An den Anschlussklemmen für die Stromversorgung bzw. die Stromverteilung sind Kontaktstücke 16 bzw. 17 vorgesehen, welche in oder ausser elektrisch leitenden Eingriff mit hohlen Gegenkontaktstücken bringbar sind, welche am Gehäusekörper 3 des Schalters angeordnet und mit der vom Schalthebel 4 betätigbaren Kontaktanordnung des Schalters 1 elektrisch leitend verbunden sind. Der Aufbau und die Anordnung dieser insgesamt 6 Gegenkontaktstücke sind aus Fig.8 und deren Zusammenwirken mit den Kontaktstücken 16 und 17 aus den Figuren 12 und 13 ersichtlich. Das feststehende Teil weist einen L-förmig ausgebildeten Gehäusekörper auf mit einem als Schenkel des L ausgebildeten Seitenteil 18, das der Führung des Schalters 1 und der Aufnahme der Betätigungswelle 9 dient. Durch die Betätigungswelle können die Kontaktstücke 16, 17 in oder ausser Eingriff mit den Gegenkontaktstücken gebracht werden. Auf der Vorderseite des Seitenteils 18 ist eine Öffnung 39 vorgesehen, welche die Einführung des Werkzeugs 8 ins Innere des Seitenteils 18 an ein profiliert ausgebildetes freies Ende der Betätigungswelle 9 ermöglicht.

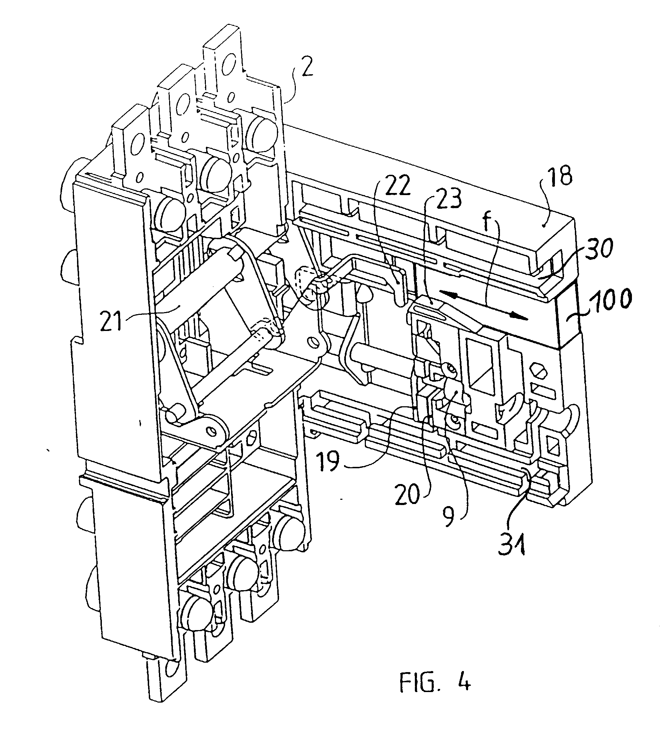

Aus Fig.4 kann man erkennen, dass die Betätigungswelle im Seitenelement 18 drehbar gelagert ist. Die Betätigungswelle 9 ist eine Spindel mit einem Aussengewinde und arbeitet mit einem längs der Spindelachse verschiebbaren und auf den Gehäusekörper 3 des Schalters 1 wirkenden Mitnehmerschlitten 19 zusammen. Bei einer Rotation der Betätigungswelle 9 werden der Mitnehmerschlitten 19 und damit auch der Gehäusekörper 3 des Schalters 1 in der durch einen Pfeil f angegebene Richtung verschoben. 20 bezeichnet ein Blockierplättchen.

Der Gehäusekörper des feststehenden Teils nimmt ein Hebelwerk 21 zur Ankopplung des beweglichen Gehäusekörpers 3 des Schalters auf. Dieses Hebelwerk arbeitet mit einer am beweglichen Gehäusekörper 3 schwenkbar befestigten Ankoppelvorrichtung, welche einen Haken 22 aufweist, zusammen. Der Haken 22 kann in der Trennstellung durch Einschieben eines mit einer Steuerkulisse 23 starr verbundenen Druckknopfes 100 geschwenkt werden.

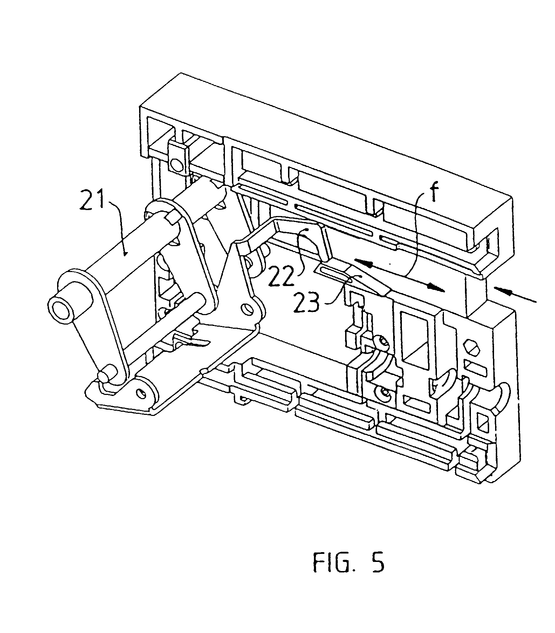

Wie aus Fig.5 ersichtlich ist, wird beim Einschieben des Druckknopfes 100 der Haken 22 nach oben geschwenkt und so die Ankoppelung der schwenkbaren Ankoppelvorrichtung an das Hebelwerk 21 aufgehoben. Der bewegliche Gehäusekörper 3 des Schalters 1 kann dann aus dem feststehenden Teil 2 herausgeschoben werden. Diese Schubbewegung wird ermöglicht durch zwei im Seitenteil 18 angeordnete und hinterschnitten ausgebildete Führungsnuten 30 und 31 (Fig.4), welche der Aufnahme eines in diesen Nuten verschiebbaren Profils des Schalters dienen.

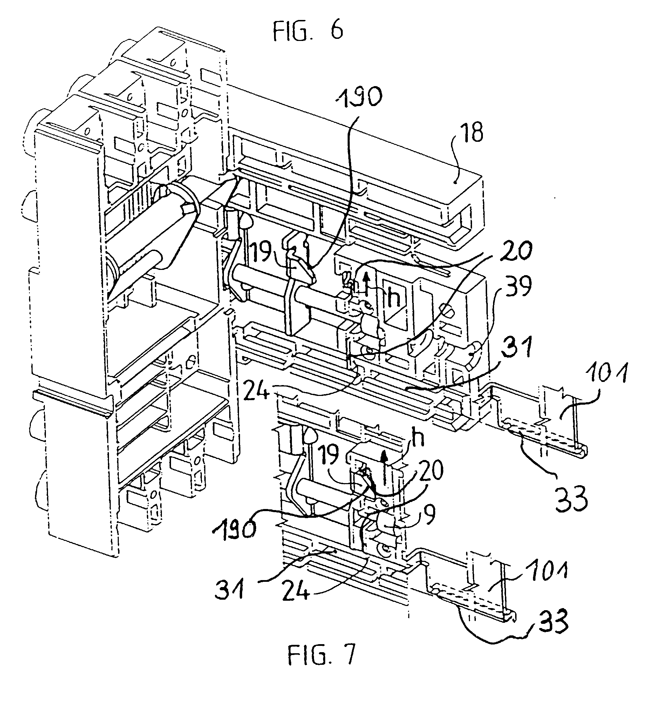

Aus den Figuren 6 und 7 ist die Wirkungsweise des Blockierplättchens 20 zu ersehen. Wenn sich der Mitnehmerschlitten 19 bei entferntem Gehäusekörper 3 in einer anderen Position als in der Position befindet, in der das Schaltergehäuse 3 vom feststehenden Teil 2 entfernt werden kann (Trennstellung) - wie dies beispielsweise bei einer unbefugten Betätigung der Betätigungswelle 9 nach Entfernen des Schaltergehäuses 3 eintreten könnte -, so ist das vertikal verschieblich angeordnete Blockierplättchen 20 unter der Wirkung einer nicht dargestellten Feder durch eine Öffnung 24 hindurch von oben in die Führungsnut 31 eingeschoben und versperrt einem Profil 33 eines am Gehäusekörper 3 angebrachten Halteschuhs 101 den Zugang in die Führungsnut 31. Der Gehäusekörper 3 kann dann nicht längs der Führungsnuten 30, 31 verschoben werden. Eine unerwünschte Kontaktierung der Kontaktstücke 16 17 mit den Gegenkontaktstücken wird so mit Sicherheit vermieden.

Aus Fig. 7 kann man entnehmen, dass in der Trennstellung eine mit dem Mitnehmerschlitten 19 starr verbundene Kulisse 190 das Blockierplättchen gegen die Kraft der nicht dargestellten Feder in Richtung des Pfeils h aus der Führungsnut 31 herausgeführt hat. Die Führungsnut 31 ist nun nicht mehr versperrt und das Profil 33 und damit der Gehäusekörper können nun durch Drehen der Betätigungswelle 9 entlang den Führungsnuten 30 und 31 verschoben werden.

Aus Fig.8 ist zu entnehmen, wie der bewegliche Gehäusekörper 3 und das feststehende Teil 2 des Schalters 1 zusammenwirken. Ersichtlich ist an einer Seitenfläche des kastenförmigen Gehäusekörpers 3 der Halteschuh 101 mit den beiden in die Führungsnuten 30 und 31 einführbaren Profilen 32 und 33 befestigt. Mit dem Halteschuh 101 starr verbunden ist ferner eine gewinkelt ausgebildete Halterung 102, an der die Ankoppelvorrichtung schwenkbar gelagert ist. Die Ankoppelvorrichtung weist neben dem schwenkbaren Haken 22 zwei weitere schwenkbare Haken 34 und 35 auf, welche fest mit dem Haken 22 verbunden sind und sich beim Einführen des Gehäusekörpers 3 an einem Bolzen 36 des Hebelwerks 21 einhängen und so das Herausschieben des Gehäusekörpers 3 aus den Führungsnuten 30 und 31 verhindern. Aus Fig.8 sind auch die mit dem Bezugszeichen 116 und 117 versehenen und mit den Kontaktstücken 16 und 17 zusammenwirkenden Gegenkontaktstücke ersichtlich.

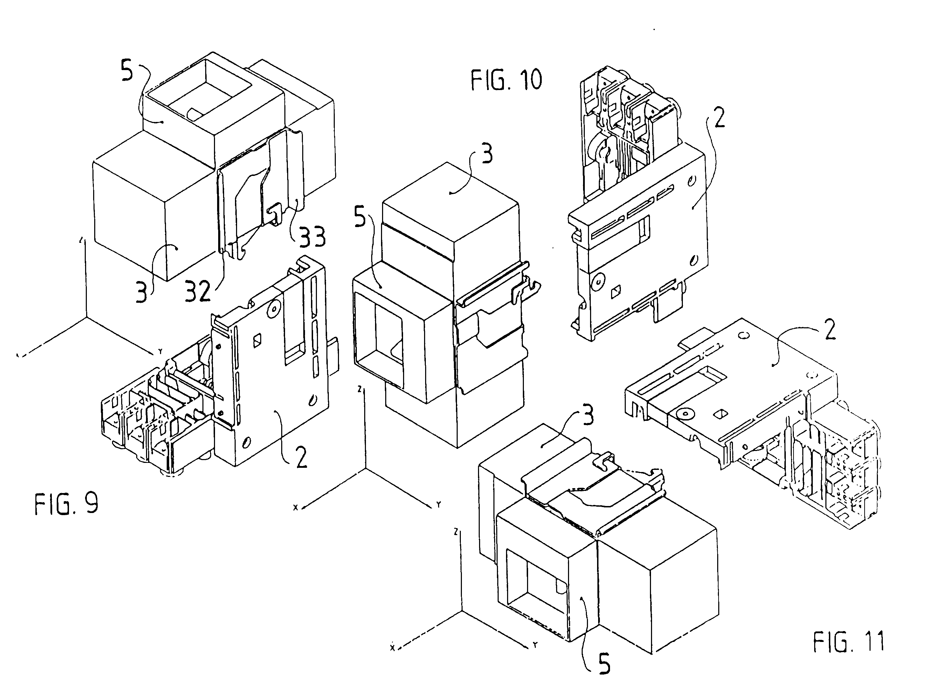

Wie aus den Figuren 9, 10 und 11 entnommen werden kann, können der kastenförmige Gehäusekörper 3 und das feststehenden Teil 2 des Schalters in beliebiger, beispielsweise senkrechter oder waagrechter, Position montiert werden. Die das Zusatzaggregat 5 enthaltende Vorderseite des Schalters 1 kann somit nach Belieben positioniert werden.

Den Figuren 12 und 13 kann man entnehmen, dass die Tür 7, welche den mit dem Bezugszeichen 50 gekennzeichneten Schaltschrank verschliesst, beim Trennen der Gegenkontakte 116 und 117 von den Kontaktstücken 16 und 17 nicht geöffnet werden muss, da es unter Zuhilfenahme des Werkzeuges 8 und des die Betätigungswelle 9 enthaltenden Spindelantriebs möglich ist, den Gehäusekörper 3 bei verschlossener Tür 7 zu verschieben.

Die Wirkungsweise des in den Figuren 1 bis 13 dargestellten Schalters ist wie folgt: Bei geöffneter Tür 7 wird der die geöffnete Leistungskontaktanordnung des Schalters enthaltende Gehäusekörper 3 in den Schaltschrank gebracht. Es werden hierbei zunächst die Profile 32, 33 des Halteschuhs 101 in die Führungsnuten 30 und 31 eingeführt und der Gehäusekörper 3 sodann in den Schaltschrank 50 eingeschoben (Fig.8). Beim Einschieben des Gehäusekörpers 3 führt die Steuerkulisse 23 den Haken 22 zunächst nach oben. Hierdurch werden die Haken 34, 35 der Ankoppelvorrichtung nach unten geschwenkt. Sobald der Haken 22 beim weiteren Einschieben des Gehäusekörpers 3 auf das hintere Teil der Steuerkulisse 23 geführt ist, wird der Haken 22 nach unten geschwenkt und hintergreifen dann schliesslich die Haken 34 und 35 den Bolzen 36 des Hebelwerks 21. Danach wird die Tür 7 des Schaltschrank 50 geschlossen und das Werkzeug 8 durch die Öffnungen 11 und 39 auf die Betätigungswelle 9 aufgesteckt. Durch Drehen der Betätigungswelle 9 wird der Mitnehmerschlitten 19 aus der Trennstellung nach hinten verschoben. Der Mitnehmerschlitten 19 wird hierbei mit seinem hinteren Ende gegen einen schwenkbar gelagerten Hebelarm 25 des Hebelwerks 21 geführt und schwenkt diesen Hebelarm 25 und damit den Bolzen 36 des Hebelwerks 21 nach hinten. Durch diese Schwenkbewegung wird auch der über die Haken 34, 35 angekoppelte Gehäusekörper 3 nach hinten geführt. Das Werkzeug 8 wird solange im Uhrzeigersinn gedreht, bis die Drehkraft nach vollständiger Kontaktierung der Kontaktstücke 16, 17 und der Gegenkontaktstücke 116, 117 merklich höher wird (Einfahrstellung).

Das Werkzeug 8 kann nun entfernt und der Schalter 1 durch Betätigung des Schalthebels 4 eingeschaltet werden. Beim Einschalten wird die Sperrfahne 10 in die Öffnung 11 eingeführt und verhindert so das Aufstecken des Werkzeug 8 auf die Betätigungswelle 9. Ein unzulässiges Drehen der Betätigungswelle 9 bei geschlossenem Schalter 1 wird so mit Sicherheit vermieden.

Zum Trennen wird der Schalter 1 ausgeschaltet und die Öffnung 11 freigegeben. Mit dem nun auf die Betätigungswelle 9 aufgesteckten Werkzeug 8 wird die Betätigungswelle 9 im Gegenuhrzeigersinn verdreht. Durch diese Drehbewegung wird der Mitnehmerschlitten 19 nach vorne geführt und schlägt mit seinem vorderen Ende am Halteschuh 101 an. Der Halteschuh 101 und damit auch der Gehäusekörper 3 werden nun nach vorne verschoben. Durch diese Bewegung wird auch das Hebelwerk 21 wieder nach vorne geschwenkt. Das Blockierplättchen 20 ist während dieses Vorganges auf dem Profil 32 abgestützt und beeinträchtigt die Bewegung des Gehäusekörper 3 nicht. Schliesslich führt die Kulisse 190 des Mitnehmerschlittens 19 das Blockierplättchen nach oben und zugleich wird eine weitere Schubbewegung des Mitnehmerschlittens 19 und damit auch des Gehäusekörpers 3 verhindert. Das Drehmoment erhöht sich nun sprunghaft und die Trennstellung ist erreicht.

Die Tür 7 des Schaltschranks 50 kann geöffnet werden. Durch das zuvor beschriebene Einschieben des Druckknopfs 100 können die Haken 34 und 35 nach unten geschwenkt und kann somit der Gehäusekörper 3 vom feststehenden Teil 2 mechanisch entkoppelt werden. Der Gehäusekörper 3 kann nun aus dem Schaltschrank 50 entfernt werden. Betätigt nun jemand die Betätigungswelle 9, so verklemmt das Blockierplättchen 20 die Führungsnut 31 und verhindert ein unzulässiges Einschieben des Gehäusekörpers 3.

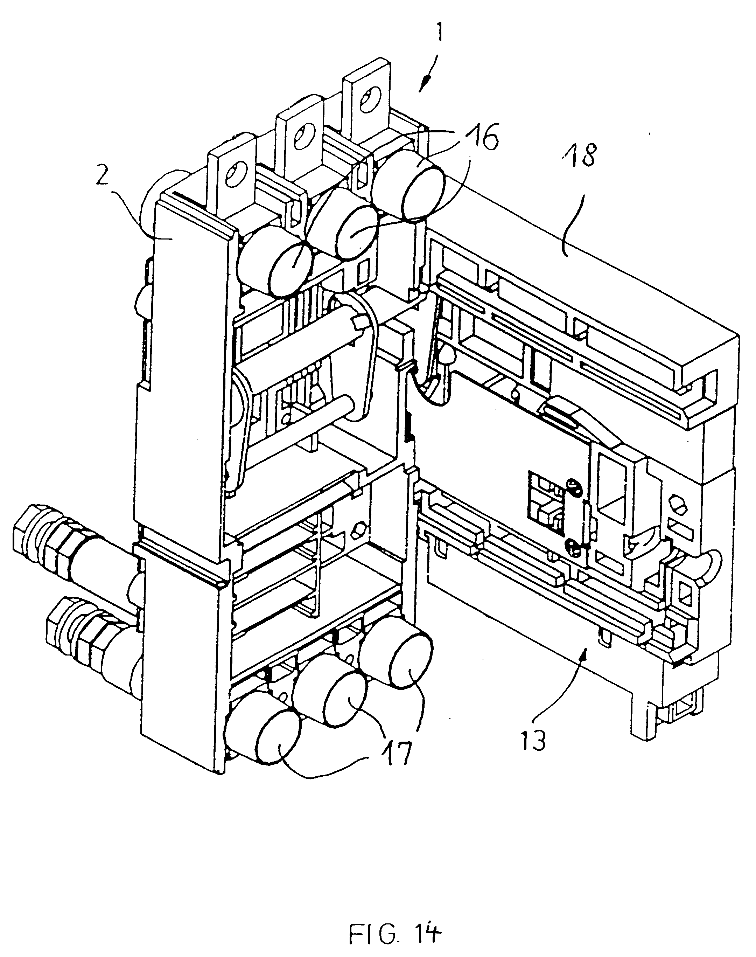

In den Figuren 14 bis 17 ist eine Ausführungsform des erfindungsgemässen Schalters dargestellt, bei der - wie aus Fig.14 zu erkennen ist - der Schalter zusätzlich eine Sperrvorrichtung 13 aufweist. Diese Sperrvorrichtung soll verhindern, dass in der Trennstellung die Gegenkontaktstücke 116 und 117 des Gehäusekörpers 3 versehentlich noch einmal in Kontakt kommen mit den Kontaktstücken 16 und 17 des feststehenden Teils 2.

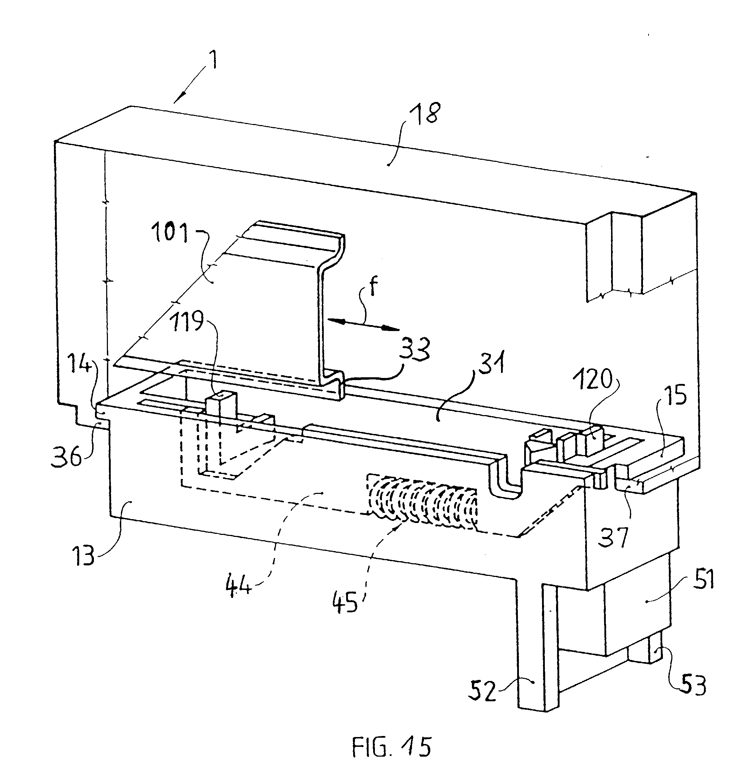

Der Aufbau und die Wirkungsweise der Sperrvorrichtung 13 ist aus den Figuren 15 bis 17 entnehmbar. Wie man aus diesen Figuren erkennen kann, ist die Sicherheitsvorrichtung 13 formschlüssig mit dem Seitenteil 18 verbunden. Die formschlüssige Verbindung wird durch zwei parallele Leisten 14 und 15 erreicht, die eine obere seitliche Begrenzung der Sperrvorrichtung 13 bilden, und die in zwei nutenförmig ausgebildete, parallele Führungen 36 und 37 eingepasst sind, die an der Unterseite des Seitenteils vorgesehen sind.

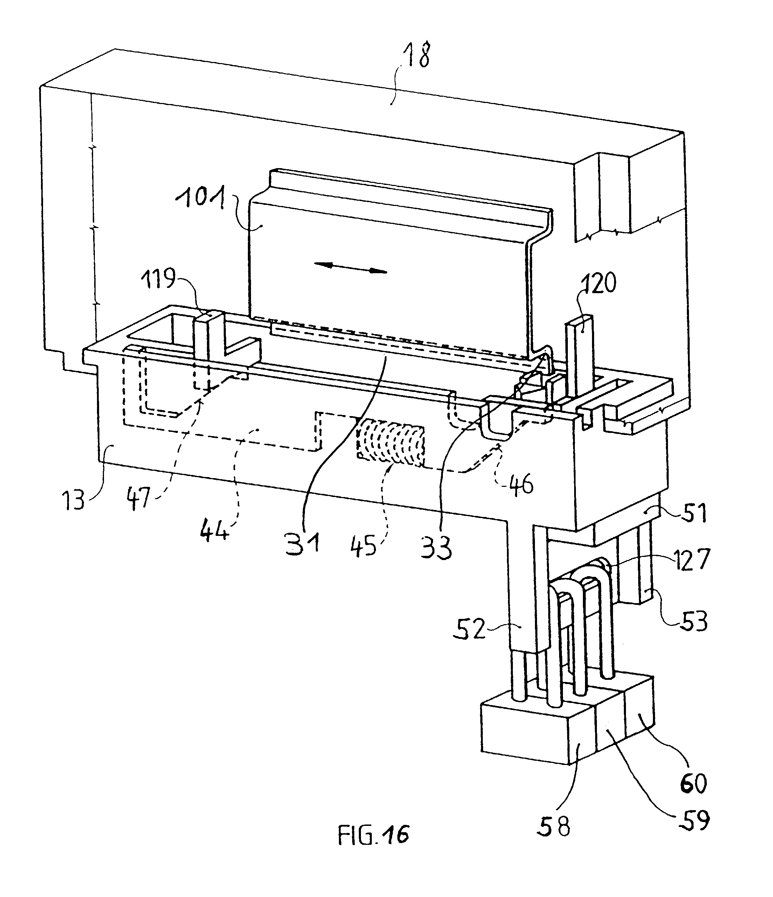

Die Sperrvorrichtung 13 weist zwei Riegel 119 und 120 auf, die aus einer inaktiven, in Fig.15 dargestellten Position, in der sie die freie Bewegung des Profils 33 des Halteschuhs 101 in der Führungsnut 31 ermöglichen, in vertikaler Richtung in eine aktive, in Fig.16 dargestellte Position verschoben werden können, in der verhindert wird, dass der Halteschuh 101 und damit der Gehäusekörper 3 sich in bezug auf das feststehende Seitenteil 18 bewegen kann.

Die Sperrvorrichtung 13 enthält auf der Vorderseite einen Druckknopf 51 auf, der in parallelen Führungen 52 und 53 verschiebbar angeordnet ist. Der Druckknopf 51 wirkt auf eine vertikal und in Verschiebungsrichtung des Gehäusekörpers 3 (Richtung des Doppelpfeils f) ausgerichtete Platte 44, welche gegen die Wirkung einer Druckfeder 45 im Inneren der Sperrvorrichtung 13 in Richtung des Pfeils f verschiebbar gelagert ist.

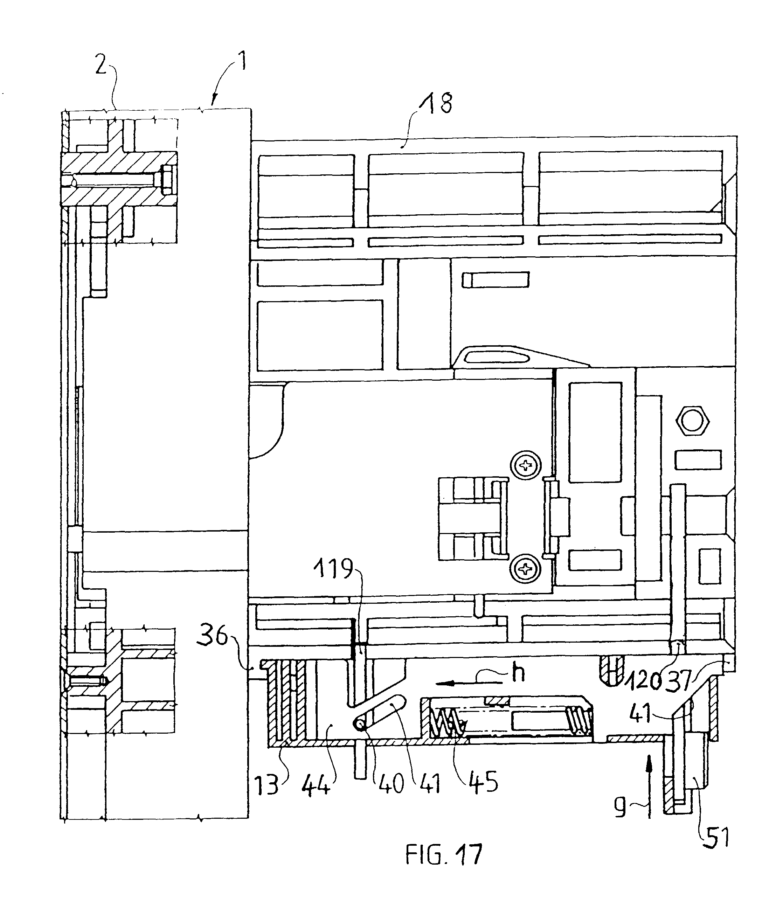

In der Position, die in Fig. 17 dargestellt ist, sind die Riegel 119 und 120 inaktiv. Wenn der Druckknopf 51 nach oben geschoben wird, wie dies durch den Pfeil g angezeigt wird, führt dies dazu, dass sich die Platte 44 gegen die Wirkung der Druckfeder 45 in die durch den Pfeil h angegebene Richtung bewegt und somit die Riegel 119 und 120 nach oben verschoben werden.

Um die Riegel 119 und 120 nach oben zu verschieben, sind schräge Führungen vorgesehen. Die Riegel 119, 120 weisen - wie dies am Riegel 119 zu ersehen ist - vorteilhafterweise jeweils einen kleinen Zapfen 40 auf, der in einer schräg nach oben geführten Nut oder fensterförmigen Öffnung 41 der Platte 44 geführt ist.

In Fig.15 sind die beiden Riegel 119 und 120 inaktiv und der Druckknopf 51 ist nicht gedrückt. In Fig.16 ist der Druckknopf 51 hingegen nach oben gedrückt. Durch die Betätigung des Druckknopfs 51 wurde die Platte 44 gegen die Wirkung der sich komprimierenden Druckfeder 45 nach links verschoben und wurden hierbei die von schrägen Flächen 46 und 47 oder den fensterförmigen Öffnungen 41 der Platte 44 geführten Riegel 119 und 120 aus der Sperrvorrichtung 13 heraus in die Führungsnut 31 geführt. Der Halteschuh 101 und damit auch der Gehäusekörper 3 können nun nicht mehr verschoben werden.

Durch die Aktivierung des Druckknopfs 51 wird zwischen den parallelen Führungen 52 und 53 eine kleine fensterförmige Öffnung 127 freigegeben, die es ermöglicht, Vorhängeschlösser 58, 59 und 60 einzuhängen. Die Anzahl der Vorhängeschlösser hängt davon ab, wieviele Personen bei Wartungs- oder Montagearbeiten in verschiedenen Bereichen einer vom Schaltschrank 50 gesteuerten elektrischen Anlage arbeiten müssen.

Aufgrund der eingehängten Vorhängeschlösser 58, 59 und 60 ist es daher nicht möglich, dass der Druckknopf 51 unter der Wirkung der Feder 25 wieder nach unten geführt wird und es zu einer Verschiebung des Platte 44 in den inaktiven Zustand kommt, in dem wie in Fig.15 dargestellt ist, der Halteschuh 101 verschiebbar geführt ist. Vielmehr bleibt der Druckknopf 51 ständig gedrückt und verhindern die nach oben geführten Riegel 119 und 120 eine Verschiebung des Halteschuhs 101 und damit eine Aufhebung der Trennstellung des Schalters 1.

Sobald ein erster Monteur seine Arbeiten in der Anlage beendet hat, zieht er sein Vorhängeschloss, beispielsweise das Vorhängeschloss 58, aus der Öffnung 127 heraus. Entsprechend ziehen auch die anderen Monteure nach Beendigung ihrer Arbeiten der Reihe nach ihre Vorhängeschlösser 59, 60 ab. Wenn alle Personen die Anlage verlassen haben, wird schliesslich der Druckknopfschalter 51 freigegeben und kann nun aus seiner Sperrposition (Fig. 16) in seine Freigabeposition (Fig.15) zurücklaufen.

### BEZUGSZEICHENLISTE

- 1: Schalter
- 2: feststehendes Teil
- 3: Gehäusekörper
- 4: Schalthebel
- 5: Zusatzaggregat
- 6: Öffnung
- 7: Tür
- 8: Werkzeug
- 9: Betätigungswelle
- 10: Sperrfahne
- 11: Öffnung
- 12: Abdeckung
- 13: Sperrvorrichtung
- 14, 15: Leisten
- 16, 17: Kontaktstücke
- 18: Seitenteil
- 19: Mitnehmerschlitten
- 20: Blockierplättchen
- 21: Hebelwerk
- 22: Haken
- 23: Steuerkulisse
- 24: Öffnung
- 25: Hebelarm
- 30, 31: Führungsnuten
- 32, 33: Profile
- 36, 37: Führungen
- 39: Öffnung
- 40: Zapfen
- 41: fensterförmigen Öffnung
- 44: Platte
- 45: Druckfeder
- 46, 47: schräge Flächen
- 50: Schaltschrank
- 51: Druckknopf
- 52, 53: Führungen
- 58, 59, 60: Vorhängeschlösser
- 100: Druckknopf
- 101: Halteschuh
- 102: Halterung
- 116, 117: Gegenkontaktstücke
- 127: Öffnung
- 190: Kulisse

## Patentansprüche

1. Schaltschrank mit einem eine Tür (7) aufweisenden Gehäuse und mit einem kastenförmigen Schalter (1), welcher im Schaltschrank (50) durch einen Schubvorgang in eine Einfahr- oder in eine Trennstellung bringbar ist, wobei der Schalter (1) ein im Gehäuse montiertes feststehendes Teil (2), einen mit dem feststehenden Teil (2) zusammenwirkenden, aus dem Gehäuse entfernbaren beweglichen Gehäusekörper (3), eine Trennvorrichtung zum Erreichen der Einfahr- oder der Trennstellung und einen durch eine in der Tür (7) vorgesehene erste Öffnung (6) nach aussen geführten Schalthebel (4) enthält, und wobei die Tür (7) eine zweite Öffnung (11) aufweist, welche der Durchführung eines den Betrieb der Trennvorrichtung bei geschlossener Tür (7) ermöglichenden Werkzeugs (8) dient, dadurch gekennzeichnet, dass der Schalter (1) ein durch die erste Öffnung (6) geführtes Zusatzaggregat (5) mit einer Sperrfahne (10) aufweist, welche bei einer Betätigung des Schalthebels (4) während eines Einschaltvorganges die zweite Öffnung (11) verschliesst.

2. Schaltschrank nach Anspruch 1, dadurch gekennzeichnet, dass das feststehende Teil (2) einen L-förmig ausgebildeten Gehäusekörper aufweist, dass ein als Schenkel des L ausgebildetes Seitenteil (18) der Führung des Gehäusekörpers (3) des Schalters (1) und der Aufnahme eines Teils der Trennvorrichtung dient, und dass im Seitenteil (18) mindestens eine hinterschnitten ausgebildete Führungs-nut (30, 31) zur Aufnahme eines in der Führungsnut (30, 31) verschiebbaren Profils (32, 33) eines Halteschuhs (101) des Schalters (1) vorgesehen ist (Fig.8).

3. Schaltschrank nach Anspruch 2 dadurch gekennzeichnet, dass die Trennvorrichtung einen im Seitenteil (18) gelagerten Spindelantrieb mit einer Betätigungswelle (9) und mit einem von der Betätigungswelle (9) gleitend bewegten und auf den Gehäusekörper (3) des Schalters (1) wirkenden Mitnehmerschlitten (19) aufweist.

4. Schaltschrank nach Anspruch 3, dadurch gekennzeichnet, dass die Trennvorrichtung eine am Gehäusekörper (3) angeordnete Ankoppelvorrichtung aufweist, welche im Einschaltzustand mit einem am feststehenden Teil (2) angeordneten Hebelwerk (21) der Trennvorrichtung zusammenwirkt.

5. Schaltschrank nach Anspruch 4, dadurch gekennzeichnet, dass die Ankoppelvorrichtung mindestens einen am Gehäusekörper (3) schwenkbar gelagerten Haken (34, 35) aufweist, welcher in der Trenn- und in der Einfahrstellung einen Bolzen (36) des Hebelwerks (21) hintergreift, und dass das Hebelwerk (21) einen am feststehenden Teil (2) schwenkbar gelagerten Hebelarm (25) aufweist, welcher bei einer Verschiebung des Mitnehmerschlittens (19) in die Einfahrstellung am Mitnehmerschlitten (19) anschlägt.

6. Schaltschrank nach Anspruch 5, dadurch gekennzeichnet, dass der Mitnehmerschlitten (19) eine Kulisse (190) aufweist, welche in der Trennstellung ein Verriegelungselement (20) aus einer dem Verschieben des Gehäusekörpers (3) dienenden Führungsnut (31) fernhält (Fig.7).

7. Schaltschrank nach einem der Ansprüche 2 bis 6, dadurch gekennzeichnet, dass im Seitenteil (18) eine Steuerkulisse (23) angeordnet ist, welche beim Einschieben des Gehäusekörpers (3) in den Schaltschrank (50) mit einem den Schwenkwinkel der Ankoppelvorrichtung veränderbaren Haken (22) zusammenwirkt (Fig.5).

8. Schaltschrank nach Anspruch 7, dadurch gekennzeichnet, dass die Steuerkulisse (25) verschiebbar gelagert ist.

9. Schaltschrank nach einem der Ansprüche 2 bis 8, dadurch gekennzeichnet, dass am Seitenteil (18) eine Sperrvorrichtung (13) angebracht ist mit mindestens einem Riegel (119, 120), der im inaktiven Zustand der Sperrvorrichtung (13) eine ungehinderte Verschiebung des Gehäusekörpers (3) in bezug auf das feststehenden Teil (2) ermöglicht und der im aktiven Zustand der Sperrvorrichtung (13) eine Verschiebung des Gehäusekörpers (3) in bezug auf das feststehenden Teil (2) des Gehäusekörpers (3) verhindert (Figuren 15-17).

10. Schaltschrank nach Anspruch 9, dadurch gekennzeichnet, dass der mindestens eine Riegel (119, 120) abgestützt ist auf einer schräg zur Verschiebungsrichtung des Gehäusekörpers (3) angeordneten Fläche (46, 47) oder fensterartigen Öffnung (41) einer Platte (44), welche unter der Wirkung einer Druckfeder (45) stehend in der Verschiebungsrichtung bewegbar ist.

11. Schaltschrank nach Anspruch 10, dadurch gekennzeichnet, dass die Platte (44) durch einen in einer Parallelführung (52, 53) gleitend verschiebbaren Druckknopf (51) bewegbar ist, und dass in der Parallelführung (52, 53) eine Öffnung (127) vorgesehen ist, welche bei eingerücktem Druckknopf freiliegt und in die dann zu Sicherheitszwecken vorgesehene Vorhängeschlösser (58, 59, 60) einhängbar sind.

## Claims

1. Switch cabinet having a housing exhibiting a door (7) and having a box-shaped switch (1) which can be brought in the switch cabinet (50) by means of a pushing operation into a connected position or into a disconnected position, the switch (1) containing a fixed part (2) mounted in the housing, a movable housing body (3) which interacts with the fixed part (2) and can be removed from the housing, a disconnecting device for achieving the connected position or the disconnected position, and a switching lever (4) guided to the outside through a first opening (6) provided in the door (7), and the door (7) having a second opening (11) which serves to guide through a tool (8) which facilitates the operation of the disconnecting device with the door (7) closed, characterized in that the switch (1) exhibits an additional unit (5), which is guided through the first opening (6) and has a blocking lug (10) which closes the second opening (11) upon actuation of the switching lever (4) during a closing operation.

2. Switch cabinet according to Claim 1, characterized in that the fixed part (2) exhibits a housing body constructed in the shape of an L, a side part (18), which is constructed as a limb of the L, serves to guide the housing body (3) of the switch (1) and to accommodate a part of the disconnecting device, and there is provided in the side part (18) at least one guide groove (30, 31), constructed in an undercut manner, for accommodating a profile (32, 33), which can be displaced in the guide groove (30, 31), of a retaining shoe (101) of the switch (1) (Figure 8).

3. Switch cabinet according to Claim 2, characterized in that the disconnecting device exhibits a spindle drive which is mounted in the side part (18) and has an actuating shaft (9) and a driver carriage (19) which is moved in a sliding fashion by the actuating shaft (9) and acts on the housing body (3) of the switch (1).

4. Switch cabinet according to Claim 3, characterized in that the disconnecting device exhibits a coupling device which is arranged on the housing body (3) and interacts in the closed state with a lever mechanism (21), arranged on the fixed part (2), of the disconnecting device.

5. Switch cabinet according to Claim 4, characterized in that the coupling device exhibits at least one hook (34, 35), which is pivotably mounted on the housing body (3) and in the disconnected position and in the connected position grips a bolt (36) of the lever mechanism (21) from behind, and the lever mechanism (21) exhibits a lever arm (25) which is pivotably mounted on the fixed part (2) and strikes against the driver carriage (19) when the driver carriage (19) is displaced into the connected position.

6. Switch cabinet according to Claim 5, characterized in that the driver carriage (19) exhibits a link (190) which in the disconnected position withholds a locking element (20) from a guide groove (31) which serves for the displacement of the housing body (3) (Figure 7).

7. Switch cabinet according to one of Claims 2 to 6, characterized in that there is arranged in the side part (18) a control link (23) which upon insertion of the housing body (3) into the switch cabinet (50) interacts with a hook (22) which can vary the pivoting angle of the coupling device (Figure 5).

8. Switch cabinet according to Claim 7, characterized in that the control link (25) is mounted displaceably.

9. Switch cabinet according to one of Claims 2 to 8, characterized in that there is mounted on the side part (18) a blocking device (13) having at least one latch (119, 120) which in the inactive state of the blocking device (13) facilitates unhindered displacement of the housing body (3) with respect to the fixed part (2), and which in the active state of the blocking device (13) prevents displacement of the housing body (3) with respect to the fixed part (2) of the housing body (3) (Figures 15-17).

10. Switch cabinet according to Claim 9, characterized in that the at least one latch (119, 120) is supported on a surface (46, 47), or a window-like opening (41) of a plate (44), which is arranged obliquely relative to the direction of displacement of the housing body (3) and can be moved standing upright in the direction of displacement under the action of a compression spring (45).

11. Switch cabinet according to Claim 10, characterized in that the plate (44) can be moved by means of a push button (51) which can be displaced in a sliding fashion in a parallel guide (52, 53), and there is provided in the parallel guide (52, 53) an opening (127) which is exposed when the push button is moved in and in which it is then possible to hang padlocks (58, 59, 60) provided for safety purposes.

## Revendications

1. Coffret électrique muni d'un boîtier présentant une porte (7) et muni d'un disjoncteur (1) en forme de caisson, lequel peut être logé dans le coffret électrique (50) dans une position d'engagement ou de débrochage par un mouvement coulissant, le disjoncteur (1) agissant comprenant une partie fixe (2) montée dans le boîtier, un corps de boîtier (3) agissant conjointement avec la partie fixe (2) et pouvant être extrait du boîtier, un dispositif de débrochage destiné à atteindre la position d'engagement ou de débrochage et un levier de commande (4) dirigé vers l'extérieur au travers d'une première ouverture (6) prévue dans la porte (7), et la porte (7) présentant une deuxième ouverture (11), laquelle sert au passage d'un outil (8) permettant d'actionner le dispositif de débrochage lorsque la porte (7) est fermée, caractérisé par le fait que le disjoncteur (1) présente un groupe supplémentaire (5) guidé au travers de la première ouverture (6) et muni d'un talon d'arrêt (10), lequel ferme la deuxième ouverture (11) lors d'un actionnement du levier de commande (4) pendant un processus d'engagement.

2. Coffret électrique selon la revendication 1, caractérisé par le fait que la partie fixe (2) présente un corps de boîtier réalisé sous la forme d'un L, que la partie latérale (18) réalisée sous la forme d'une branche du L sert au guidage du corps de boîtier (3) du disjoncteur (1) et à recevoir une partie du dispositif de débrochage, et qu'au moins une rainure de guidage (30, 31) contre-dépouillée est prévue, laquelle est destinée à recevoir un profilé (32, 33) d'un patin d'arrêt (101) du disjoncteur (1) coulissant dans la rainure de guidage (30, 31) (Figure 8).

3. Coffret électrique selon la revendication 2, caractérisé par le fait que le dispositif de débrochage présente un entraînement par broche logé dans la partie latérale (18) muni d'un arbre d'actionnement (9) et un curseur d'entraînement (19) coulissé par l'arbre de manoeuvre (9) et agissant sur le corps de boîtier (3) du disjoncteur (1).

4. Coffret électrique selon la revendication 3, caractérisé par le fait que le dispositif de débrochage présente un dispositif d'accouplement disposé sur le corps de boîtier (3), lequel agit conjointement avec un mécanisme à levier (21) disposé sur la partie fixe (2) du dispositif de débrochage en position d'engagement.

5. Coffret électrique selon la revendication 4, caractérisé par le fait que le dispositif d'accouplement présente au moins un crochet (34, 35) monté sur le corps de boîtier (3) de façon à pouvoir pivoter, lequel vient s'accrocher à un axe (36) du mécanisme à levier (21) en position de débrochage et d'engagement, et que le mécanisme à levier (21) présente un bras de levier (25) monté sur la partie fixe (2) de façon à pouvoir pivoter, lequel vient buter sur le curseur d'entraînement (19) lors d'un déplacement du curseur d'entraînement (19) en position d'engagement.

6. Coffret électrique selon la revendication 5, caractérisé par le fait que le curseur d'entraînement (19) présente un coulisseau (190), lequel garde un élément de verrouillage (20) hors d'une rainure de guidage (31) servant à faire coulisser le corps de boîtier (3) en position de débrochage (Figure 7).

7. Coffret électrique selon l'une des revendications 2 à 6, caractérisé par le fait qu'un coulisseau de commande (23) est disposé dans la partie latérale (18), lequel agit conjointement avec un crochet (22) modifiant l'angle de pivotement du dispositif d'accouplement lors de l'introduction du corps de boîtier (3) dans le coffret électrique (50) (Figure 5).

8. Coffret électrique selon la revendication 7, caractérisé par le fait que le coulisseau de commande (25) est monté de façon à pouvoir coulisser.

9. Coffret électrique selon l'une des revendications 2 à 8, caractérisé par le fait qu'un dispositif d'arrêt (13) est monté sur la partie latérale (18) avec au moins un verrou (119, 120) qui permet un déplacement sans gêne du corps de boîtier (3) par rapport à la partie fixe (2) en position inactive du dispositif d'arrêt (13) et qui empêche tout déplacement du corps de boîtier (3) par rapport à la partie fixe (2) du corps de boîtier (3) en position inactive du dispositif d'arrêt (13) (Figures 15 - 17).

10. Coffret électrique selon la revendication 9, caractérisé par le fait que ledit au moins un verrou (119, 120) est soutenu par une surface (46, 47) oblique par rapport au sens de déplacement du corps de boîtier (3) ou par une ouverture en forme de fenêtre (41) d'une plaque (44), laquelle est mobile sous l'action d'un ressort presseur (45) fixe dans le sens de déplacement.

11. Coffret électrique selon la revendication 10, caractérisé par le fait que la plaque (44) peut être déplacée à l'aide d'un bouton poussoir (51) coulissant dans des guides parallèles (52, 53), et qu'une ouverture (127) est prévue dans les guides parallèles (52, 53), laquelle est libérée lorsque le bouton poussoir est enfoncé et dans laquelle peuvent alors être accrochés des cadenas (58,59, 60) destinés à des fins de sécurité.
